(19) Europäisches Patentamt
European Patent Office
Office européen des brevets

(11) Veröffentlichungsnummer : **0 044 480**
**B1**

(12) # EUROPÄISCHE PATENTSCHRIFT

(45) Veröffentlichungstag der Patentschrift : **11.04.84**

(51) Int. Cl.³ : **C 01 B 15/023**, C 07 C127/19

(21) Anmeldenummer : **81105386.7**

(22) Anmeldetag : **10.07.81**

(54) **Verfahren zur Herstellung von Wasserstoffperoxid.**

(30) Priorität : **18.07.80 DE 3027253**

(43) Veröffentlichungstag der Anmeldung : **27.01.82 Patentblatt 82/04**

(45) Bekanntmachung des Hinweises auf die Patenterteilung : **11.04.84 Patentblatt 84/15**

(84) Benannte Vertragsstaaten : **AT BE CH DE FR GB IT LI NL SE**

(56) Entgegenhaltungen :
**DE-A- 2 446 053**
**DE-C- 1 914 739**
**DE-C- 2 018 686**
**DE-C- 2 532 819**
**US-A- 2 655 534**

(73) Patentinhaber : **Degussa Aktiengesellschaft**
**Weissfrauenstrasse 9**
**D-6000 Frankfurt am Main 1 (DE)**

(72) Erfinder : **Goor, Gustaaf, Dr. Dipl.-Chem.**
**Vosswaldestrasse 7**
**D-6450 Hanau 9 (DE)**
Erfinder : **Kunkel, Wolfgang, Dr. Dipl.-Chem.**
**Goethestrasse 58a**
**D-8752 Kleinostheim (DE)**

**EP 0 044 480 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Wasserstoffperoxid

Eines der industriell wichtigsten Verfahren zur Herstellung von Wasserstoffperoxid ist das sogenannte Anthrachinonverfahren.

Bekanntlich wird hierbei ein alkyliertes Anthrachinon als Reaktionsträger eingesetzt, in Gegenwart eines Katalysators hydriert und das entstandene Anthrahydrochinon anschliessend wieder oxydiert, wobei sowohl das ursprünglich eingesetzte Anthrachinon wieder zurückerhalten, wie auch gleichzeitig Wasserstoffperoxid gewonnen wird. Letzteres wird im allgemeinen durch Extraktion mit Wasser aus dem Herstellungsprozess ausgeschleust.

Zur Durchführung des Verfahrens müssen sowohl das Anthrachinon wie das während des Prozesses gebildete Anthrahydrochinon in gelöster Form vorliegen. Die Gesamtheit aus Anthrachinon, Anthrahydrochinon und dem Lösungsmittel ist bekanntlich die sogenannte « Arbeitslösung ».

Die hohen Anforderungen, die an Lösungsmittel im Anthrachinonverfahren gestellt werden, erfüllen technisch im allgemeinen nur Gemische, die so zusammengesetzt sind, dass sie mindestens ein Lösungsmittel enthalten, das die Chinonform des Reaktionsträgers und mindestens ein Lösungsmittel enthalten, das die Hydrochinonform des Reaktionsträgers bevorzugt löst. Bekanntlich bezeichnet man diese Lösungsmittel ihrer Aufgabe entsprechend als Chinon- bzw. Hydrochinonlöser.

Arbeitslösungen, die aus nur einem Lösungsmittel bestehen, konnten sich bisher technisch nicht durchsetzen, s. Winnacker-Küchler, Chem. Technologie, Bd. 1, Anorg. Technologie I, 1970, S. 533 und 534. Einige der in der Patentliteratur vorgeschlagenen Lösungsmittelgemische sind in Tabelle 1 zusammengestellt :

Tabelle 1

| Deutsche Patent- bzw. Auslegeschriften Nr. | Chinonlöser | Hydrochinon-löser |
|---|---|---|
| 963 150 | Benzol | Methylcyclohexanolacetat |
| 953 790 | Alkylbenzol | Methylcyclohexanolacetat |
| 888 840 | Methylnaphtalin | Diisobutylcarbinol |
| 1 019 290 | Methylnaphtalin | Phosphorsäureester |
| 1 261 838 | Alkylbenzol | Phosphorsäureester |
| 1 945 750 | tert. Butylbenzol | Phosphor- bzw. Phosphonsäureester |
| 2 018 686 | aromatische Kohlenwasserstoffe | tetraalkyl-, cycloalkyl- oder aralkylsubstituierte Harnstoffe |

Es ist ferner bekannt, auch Gemische von Hydrochinonlösern neben dem Chinonlöser einzusetzen ; so wird nach dem Verfahren der DE-PS 25 32 819 als Chinonlöser ein aromatischer Kohlenwasserstoff, als Hydrochinonlöser aber ein Gemisch aus einem tetraalkyl-, cycloalkyl oder aralkylierten Harnstoff und einem Trioctylphosphat oder -phosphonat verwendet.

Bei der technischen Ausübung des Anthrachinonverfahrens werden — wie gesagt — die Arbeitslösungen und damit die in ihr enthaltenen Lösungsmittel entsprechend der Kreislaufführung des Verfahrens sowohl Reduktionsstufen zugeführt, in denen die Lösungsmittel in Gegenwart, von Edelmetallkatalysatoren dem Angriff von Wasserstoff unterliegen, als auch Oxydationsstufen, in denen meist bei höherem Druck die Lösungsmittel dem Angriff von Sauerstoff ausgesetzt sind.

Die Chinon- und Hydrochinonlöser müssen also nicht nur gute Lösungsmittel für die Chinon- bzw. Hydrochinonform des Reaktionsträgers sein, sondern sie müssen sich sowohl in der Hydrier- wie Oxydationsstufe möglichst wenig verändern, ausserdem wenig löslich in Wasser und wässrigen Wasserstoffperoxidlösungen sein, jedoch eine solche Dichte besitzen, dass bei der Extraktion des Wasserstoffperoxids mit Wasser Trennung der beiden Phasen ohne weiteres möglich ist. Ferner sollen sie eine geringe Flüchtigkeit, aber einen hohen Verteilungskoeffizienten für Wasserstoffperoxid im System Lösungsmittel/Wasser aufweisen und ausserdem möglichst wenig toxisch sein, s. Ullmann, Enzyklopädie der technischen Chemie, 4. Auflage, Bd. 17, Seite 698. Ausserdem sollen sie eine hohe Wasserstoffperoxidausbeute ergeben.

Es erwies sich aber bisher als recht schwierig, eine weitgehende Beständigkeit der Lösungsmittel, d. h. eine weitgehende Vermeidung von Abbauprodukten, in den einzelnen Verfahrensstufen zu erhalten. Besonders schwierig war dies in der Oxydationsstufe.

In der DE-AS 19 45 750 wird erstmals ein oxydationsbeständiger Chinonlöser, nämlich das tert.-Butylbenzol, vorgeschlagen.

Hierbei wird als « oxydationsbeständig » im Anthrachinonverfahren dann ein Lösungsmittel bezeichnet, wenn es bei 140 °C während 1,5 bis 48 Stunden, dem Angriff von Sauerstoff ohne erkennbare Veränderung standhält.

In der DE-AS 19 14 739 werden zwar Lösungsmittel erwähnt, die oxydationsbeständig gegenüber molekularem Sauerstoff sind, deren Wasserstoffperoxidausbeute aber nicht entfernt an die nach dem Verfahren der DE-PS 2 018 686 heranreicht.

Man verwendete daher, um sowohl eine ausreichende Oxydationsbeständigkeit wie Wasserstoffperoxidausbeute zu haben, den Hydrochinonlöser zusammen mit bestimmten Antioxydantien, s. z. B. DE-PS 2 104 432.

Zweck des erfindungsgemässen Verfahrens ist daher die Verwendung eines oxydationsbeständigen Lösungsmittels im Anthrachinonverfahren, das gleichzeitig eine hohe Wasserstoffperoxidausbeute garantiert.

Es wurde nun gefunden, dass man als alleiniges Lösungsmittel bzw. als Komponente in einem Lösungsmittelgemisch einen tetrasubstituierten Harnstoff einsetzt, bei dem mindestens ein Substituent eine Arylgruppe darstellt, die direkt einen Stickstoffatom benachbart ist.

Derartige Harnstoffe sind nicht nur in hohem Maße in dem Arbeitsmedium oxydationsbeständig, sondern bringen gleichzeitig die hohen Ausbeuten an Wasserstoffperoxid wie sie in dem Verfahren der DE-PS 2 018 686 erhalten werden.

Die Arylharnstoffe entsprechen der allgemeinen Formel

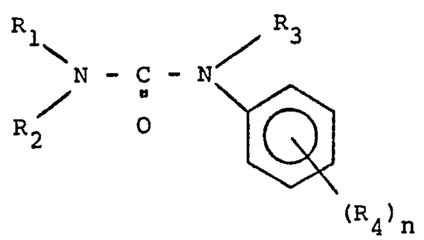

wenn nur eine Arylgruppe direkt mit einem Stickstoffatom verbunden ist.

Es ist aber ohne weiteres möglich, noch weitere Arylgruppen, direkt benachbart zu einem der beiden Stickstoffatome, in das Molekül einzuführen.

Die Zeichen $R_1$, $R_2$, $R_3$ und $R_4$ haben dann die allgemeine Bedeutung

$R_1$ = Alkylrest mit 1 bis 12, vorzugsweise 1 bis 5 C-Atomen, der ggf. durch einen oder mehrere $OR_5$-Reste substituiert sein kann, $R_5$ = H oder Alkylrest mit 1 bis 12, vorzugsweise 1 bis 5 C-Atomen, wobei die Gruppe —$OR_5$ in der unter $R_1$ genannten Alkylketten in der Mitte oder am Ende stehen kann,

$R_1$ = Cycloalkylrest mit 3 bis 7 Ring-C-Atomen, der ggf. durch einen oder mehrere Alkylreste mit 1 bis 5 C-Atomen und/oder einen oder mehrere $OR_5$-Reste substituiert sein kann,

$R_1$ = Aralkylrest, bei dem die Alkylgruppen 1 bis 5 C-Atome besitzen können und bei dem der aromatische Ring selbst ggf. durch Alkylgruppen mit 1 bis 5 C-Atomen und/oder $OR_5$-Reste substituiert sein kann,

$R_1$ = Arylrest, bei dem der aromatische Ring selbst ggf. durch Alkylgruppen mit 1 bis 5 C-Atomen und/oder $OR_5$-Reste substituiert sein kann,

$R_2$ = entsprechend einer der genannten Möglichkeiten von $R_1$, wobei $R_1$ und $R_2$ identisch oder nicht identisch sein können,

$R_1 + R_2$ = über ein 5- oder 6-Ringsystem miteinander verbunden, das ggf. durch ein Hetero-Atom wie N, O, S oder P unterbrochen ist,

$R_3$ = entsprechend $R_2$, wobei $R_2$ und $R_3$ identisch oder nicht identisch sein können,

$R_4$ = H und/oder wie $R_1$, n = 1-5.

Die Wechselwirkung der direkt an einem Stickstoffatom des Harnstoffmoleküls gebundenen Phenylgruppe (n) mit dem Harnstoffgerüst

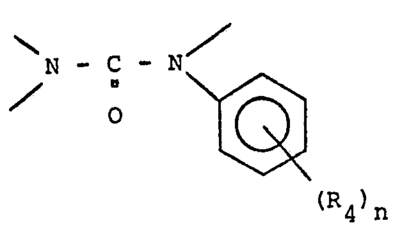

bringt die für ein organisches Lösungsmittel überraschend hohe Oxydationsbeständigkeit hervor.

Beispielhafte Verbindungen sind :

N,N,N'-Trimethyl-N'-phenylharnstoff
N,N'-Dimethyl-N-s-butyl-N'-phenylharnstoff
N,N-Diäthyl-N'-methyl-N'-phenylharnstoff
N,N,N'-Triäthyl-N'-phenylharnstoff

N,N-Dipropyl-N'-methyl-N'-phenylharnstoff
N,N-Di-i-propyl-N'-methyl-N'-phenylharnstoff
N,N-Dibutyl-N'-methyl-N'-phenylharnstoff
N,N,N'-Tributyl-N'-phenylharnstoff
N-Methyl-N-Phenylcarbamoyl-N'-morpholin.

Besonders bevorzugt sind N,N-Di-i-propyl-N'-methyl-N'-phenylharnstoff und N,N-Dibutyl-N'-methyl-N'-phenylharnstoff.

Die Harnstoffe können entweder allein oder im Gemisch mit den üblichen Chinonlösern wie Benzol, tert. Butylbenzol, Xylol, Alkylbenzol, tert. Butyltoluol, Methylnaphtalin usw. eingesetzt werden. Sehr günstig ist eine Kombination mit tert. Butylbenzol.

Das Verhältnis von Hydrochinon- zu Chinonlöser kann in relativ weiten Grenzen schwanken. Die Arbeitslösung muss so zusammengesetzt sein, dass die üblichen Extraktionsmethoden mit Wasser in den allgemein üblichen technischen Apparaturen bei der gewünschten Extraktionstemperatur möglich sind, s. Ullmann Encyklopädie der technischen Chemie, 4, Auflage, Bd. 2, Seite 546-574.

Als besonders geeignet hat sich das Volumenverhältnis von Hydrochinonlöser zu Chinonlöser von 10-50 zu 90-50 erwiesen.

Die Harnstoffe sind flüssig oder fest und haben, bedingt durch die Arylgruppe, eine Dichte, die bei 50 °C im Bereich 0,9-1,1 schwankt. In der Reihe der N,N-Dialkyl-N'-methyl-N'-phenyharnstoffe nimmt die Dichte mit der Zahl der C-Atome in den Alkylketten ab und lässt sich auf diese Weise gut regulieren.

In Tabelle 2 ist der Einfluss der Alkylsubstitution auf die Dichte (50 °C) des Harnstoffs zusammengestellt.

Tabelle 2

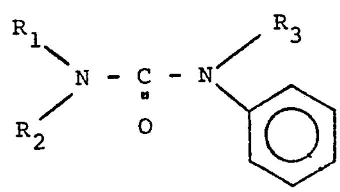

| $R_1$ = | $R_2$ = | $R_3$ = | Dichte (50 °C) $g \cdot ml^{-1}$ |
|---|---|---|---|
| Methyl- | Methyl- | Methyl- | 1,039 2 |
| Äthyl | Äthyl | Methyl | 0,994 1 |
| n-Propyl | n-Propyl | Methyl | 0,969 0 |
| n-Butyl | n-Butyl | Methyl | 0,949 9 |

Die arylierten Harnstoff haben sowohl eine hohe Hydrochinonlöslichkeit, wie auch bei 50 °C auch eine hohe Chinonlöslichkeit, da sie bei dieser Temperatur ca. 200 g Chinon pro Liter arylierte Harnstoffe lösen können. Sie können aus diesem Grund — wie schon gesagt — auch als alleinige Lösungsmittel eingesetzt werden.

Sehr wesentlich ist, dass die arylierten Harnstoffe auch die anderen gleichen Vorzüge wie die bekannten tetrasubstituierten Harnstoffe gemäss DE-PS 2 018 686 aufweisen, d. h. ebenfalls sehr alkali- und temperaturbeständig sind.

In Tabelle 3 sind die physikalischen Eigenschaften eines Aryl-harnstoffes zusammengestellt.

Tabelle 3

N,N-Dibutyl-N'-methyl-N'-phenylharnstoff

| | |
|---|---|
| Dichte (50 °C) = | 0,950 $g \cdot ml^{-1}$ |
| Viskosität (50 °C) = | 9,2 cP |
| Siedepunkt (0,4 mbar) = | 113 °C |
| Löslichkeit in Wasser bie 20 °C = | 0,01 % |
| Löslichkeit von Wasser in Harnstoff bei 20 °C = | 1,3 % |
| Löslichkeit von einem 2-Äthylanthrachinon/2-Äthyltetrahydroanthrachinon-Gemisch in diesem Harnstoff : (Anthra : Tetra = 50 : 50) bei 50 °C = | 200 g/l |

Löslichkeit eines Gemisches von 2-Äthylanthrahydrochinon und 2-Äthyltetrahydroanthrahydrochinon bei 50 °C in einem Gemisch aus

| | |
|---|---|
| mehrfach alkylierten Benzolen (70 Vol.-%, Siedebereich 180-220 °C) und diesem Harnstoff (30 Vol.-%) = | 105 g/l |
| Dichte dieser Arbeitslösung bei 20 °C = | 0,955 g |
| Dichte dieser Arbeitslösung bei 50 °C = | 0,931 g |
| Viskosität dieser Arbeitslösung bei 20 °C = | 3,33 cp |
| Viskosität dieser Arbeitslösung bei 50 °C = | 1,67 cP |

Als Einsatzstoffe für die Reaktionsträger kommen alle für das Anthrachinonverfahren verwendbaren Anthrachinonderivate in Frage, vor allem die hierfür bekannten Alkylanthrachinone, wie Äthyl-, Butyl-, tert. Butyl-, Amylanthrachinone und deren eutektische Gemische.

Die erfindungsgemäss zu verwendenden tetrasubstituierten Harnstoffe mit mindestens einer Arylgruppe, die direkt einem der beiden Stickstoffatome des Harnstoffes benachbart ist, sind zum Teil neue Substanzen. Bekannt sind bisher lediglich nach CA 85, 20583 (1967) N,N-Di-äthyl-N'-alkyl-N'-phenylharnstoffe als Substanzen.

Sie werden am besten durch Umsetzung von N-Alkylanilinen mit Phosgen im inerten Medium und weitere Reaktion mit sekundären Aminen hergestellt.

In Beispiel 5 der vorliegenden Beschreibung wird die Herstellung von N,N-Dibutyl-N'-methyl-N'-phenylharnstoff beschrieben, in Beispiel 6 die von N,N-Di-i-propyl-N'-methyl-N'-phenylharnstoff.

Der technische Fortschritt des erfindungsgemässen Verfahrens liegt — wie gesagt — in der Möglichkeit, mit den genannten tetrasubstituierten Harnstoffen oxydative Abbauerscheinungen in der Arbeitslösung zu vermeiden bzw. stark zu vermindern und zwar bei gleichzeitigem Erhalten der für tetrasubstituierte Harnstoffe bekannten hohen Ausbeute an Wasserstoffperoxid.

Es war überraschend, dass der Einsatz mindestens einer Alkylgruppe im tetrasubstituierten Harnstoff durch eine Phenylgruppe, die direkt am Stickstoffatom benachbart ist, die Oxydationsbeständigkeit der tetrasubstituierten Harnstoff stark erhöht.

Nach dem Verfahren der US-PS 2,655,534 können zwar gewisse tetrasubstituierte Harnstoffe mit mindestens einer Arylgruppe, die dem Stickstoffatom direkt benachbart ist, durch die Umsetzung von aliphatischen Aminsalzen der Monothiocarbaminsäure mit aromatischen Aminen hergestellt werden. Hier entstehen aber stets Mischungen verschiedener, auch schwefelhaltiger, tetrasubstituierter Harnstoffe.

Während N,N-Alkyl-N'-alkyl-N'-phenylharnstoffe nach der amerikanischen Patentschrift hergestellt werden können, bei denen die drei Alkylgruppen identisch sind, finden sich dort keine Arylharnstoffe, deren N,N-Alkylgruppen zwar gleich, deren N'-Alkylgruppe, also die der Arylgruppe benachbarte Alkylgruppe, aber von den beiden anderen Alkylgruppen verschieden ist, wie z. B. N,N-Dibutyl-N'-methyl-N'-phenylharnstoff und N,N-Di-i-propyl-N'-methyl-N'-phenylharnstoff. Diese beiden tetrasubstituierten Harnstoffe sind aber besonders geeignet zum Einsetzen im Anthrachinonverfahren. Sie waren als Substanzen bisher nicht bekannt.

Die Erfindung wird an den nachfolgenden Beispielen erläutert, von denen Beispiel 1 und 2 die Oxydationsbeständigkeit gegenüber tetrasubstituierten Harnstoffen ohne Arylsubstituent (Beispiel 1 und 2) bzw. gegenüber anderen technisch wichtigen Hydrochinonlösern (Beispiel 2) und Beispiel 3 und 4 den hohen Gehalt der Arbeitslösung an Wasserstoffperoxid belegen.

## Beispiel 1

In einer Begasungsapparatur, ausgestattet mit Begasungsfritte und Intensivkühler werden jeweils 150 ml der in Tabelle 4 angegebenen Harnstoffe mit 36 l getrockneter Luft/h bei einer Temperatur von 140 °C 2,5 h begast. Während des Versuchs werden halbstündlich Proben gezogen und der oxidative Abbau mittels Kapillar-Gaschromatographie verfolgt. Als Mass für den oxidativen Abbau wird die Harnstoffabnahme, prozentual bezogen auf den Harnstoffanfangsgehalt, herangezogen. Die ermittelten Werte sind in der Tabelle 4 zusammengestellt.

Die Überlegenheit der erfindungsgemässen N,N,N'-Trisubstituierten-N'-arylharnstoffe im Vergleich zu den nicht-arylsubstituierten Harnstoffen in bezug auf die Oxydationsbeständigkeit geht aus der Tabelle hervor.

(Siehe Tabelle 4, Seite 6 f.)

Tabelle 4

Oxydationsbeständigkeit verschiedener tetrasubstituierter Harnstoffe

| Harnstoff | oxydativer Abbau nach 2,5 Std. |
|---|---|
| N,N,N-Trimethyl-N'-phenylharnstoff | 0 % |
| N,N'-Dimethyl-N-s-butyl-N'-phenylharnstoff | 0 % |
| N,N-Diäthyl-N'-methyl-N'-phenylharnstoff | 0 % |
| N,N-Dipropyl-N'-methyl-N'-phenylharnstoff | 0 % |
| N,N-Di-i-propyl-N'-methyl-N'-phenylharnstoff | 0 % |
| N,N-Dibutyl-N'-methyl-N'-phenylharnstoff | 0 % |
| N'-Methyl-N'-phenylcarbamoyl-N-morpholin | 0 % |
| N,N,N',N'-Tetramethylharnstoff | 2,6 % |
| N,N-Dimethyl-N',N''-di-i-propylharnstoff | 2,6 % |
| N,N-Diäthyl-N'-,N'-dibutylharnstoff | 9,2 % |

Beispiel 2

In einer ähnlichen Begasungsapparatur, wie im Beispiel 1 beschrieben, werden jeweils 150 ml der verschiedenen Hydrochinonlöser 50 h mit 36 l getrockneter Luft/h bei einer Temperatur von 140 °C begast. Der Hydrochinonlösergehalt, prozentual bezogen auf den Hydrochinonlöseranfangsgehalt, wurde gaschromatographisch ermittelt (Tabelle 5).

Tabelle 5

Oxydationsbeständigkeit verschiedener Hydrochinonlöser

| Hydrochinonlöser | Hydrochinonlösergehalt (%) nach 50 h Belüften bei 140 °C |
|---|---|
| Trioctylphosphat | 88,3 |
| Methylcyclohexanolacetat | 77,4 |
| Di-i-butylcarbinol | 16,6 |
| N,N-Diäthyl-N',N'-dibutylharnstoff | 86,8 |
| N,N-Dipropyl-N'-methyl-N'-phenylharnstoff | 100,0 |
| N,N-Dibutyl-N'-methyl-N'-phenylharnstoff | 100,0 |
| N,N-Di-i-propyl-N'-phenylharnstoff | 100,0 |

Aus der Tabelle geht die Überlegenheit der N,N,N'-Trisubstituierten-N'-phenylharnstoffe im Vergleich zu den technisch üblichen Hydrochinonlösern in bezug auf die Oxydationsbeständigkeit hervor.

Beispiel 3

In einem Lösungsmittelgemisch, bestehend aus 70 Volumenteilen tert. Butylbenzol und 30 Volumenteilen N,N-Di-i-propyl-N'-methyl-N'-phenylharnstoff, werden 2-Äthylanthrachinon und 2-Äthyltetrahydroanthrachinon gelöst, so dass die resultierende Lösung einen Gesamtchinongehalt (Anthrachinon : Tetrahydroanthrachinon = 50 : 50) von 150 g/l hat. Diese Arbeitslösung wird in einer Umwälzapparatur bei 50 °C in Gegenwart eines Festbettkatalysators bis an die Kapazitätsgrenze mit $H_2$ hydriert. Nach der Oxydation mit einem sauerstoffhaltigen Gas enthält die Arbeitslösung 14,6 g $H_2O_2$/l.

Beispiel 4

In einem Lösungsmittelgemisch, bestehend aus 70 Volumenteilen eines Alkylbenzolgemisches mit einem Siedebereich von 180-220 °C und 30 Volumenteilen N,N-Dibutyl-N'-methyl-N'-phenylharnstoff werden 2-Äthylanthrachinon und 2-Äthyltetrahydroanthrachinon, gelöst, so dass die resultierende Lösung einen Gesamtchinongehalt (Anthrachinon : Tetrahydroanthrachinon = 50 : 50) von 150 g/l hat. Diese Arbeitslösung wird auf ähnliche Weise wie im Beispiel 3 beschrieben mit $H_2$ behandelt. Nach der Oxydation mit einem sauerstoffhaltigen Gas enthält die Arbeitslösung 14,8 g $H_2O_2$/l.

Beispiel 5

Herstellung von N,N-Dibutyl-N'-methyl-N'-phenylharnstoff : In eine Lösung von N-Methylanilin (2 Mol) in Xylol (9,5 Mol) wird getrocknete Salzsäure (2 Mol) gasförmig eingeleitet. Anschliessend wird in der Wärme (100 °C) Phosgen eingeleitet bis alles N-Methylanilinhydrochlorid verbraucht ist. Nach Zugabe von Triäthylamin (2 Mol) wird bei 80 °C innerhalb einer Stunde Dibutylamin (2 Mol) zugetropft. Das ausgefallene Triäthylaminhydrochlorid wird abfiltriert, die Xylol-Lösung eingeengt und der Rückstand destilliert (Ausbeute : 99,8 %, Reinheit : 99,1 %).

Beispiel 6

Die Herstellung von N,N-Diisopropyl-N'-methyl-N'-phenylharnstoff erfolgte wie in Beispiel 5, nur, dass anstelle von Dibutylamin Diisopropylamin eingesetzt wurde.

Die Ausbeute lag bei 99,7 %, die Reinheit bei 98,8 %.

**Ansprüche**

1. Verfahren zur Herstellung von Wasserstoffperoxid nach dem Anthrachinonverfahren, bei dem ein Anthrachinonderivat als Reaktionsträger in einem Lösungsmittel oder Lösungsmittelgemisch gelöst, alternierend hydriert und oxydiert und das bei der Oxydation entstehende Wasserstoffperoxid aus dem System entfernt wird unter Einsetzen eines durch Kohlenwasserstoffreste tetrasubstituierten Harnstoffes, dadurch gekennzeichnet, dass man als alleiniges Lösungsmittel bzw. als Komponente in einen Lösungsmittelgemisch einen tetrasubstituierten Harnstoff, bei dem mindestens ein Substituent eine Arylgruppe darstellt, die einem Stickstoffatom direkt benachbart ist, einsetzt.

2. Verfahren nach Anspruch 1, dadurch gekennzeichnet, dass man einen tetrasubstituierten Harnstoff gemäss der Formel

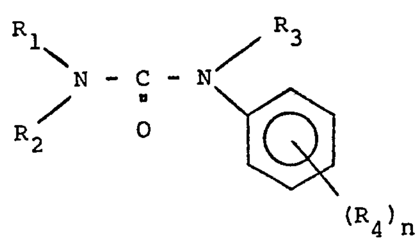

in der bedeuten :

$R_1$ = Alkylrest mit 1 bis 12, vorzugsweise 1 bis 5 C-Atomen, der ggf. durch einen oder mehrere $OR_5$-Reste substituiert sein kann, $R_5$ = H oder Alkylrest mit 1 bis 12, vorzugsweise 1 bis 5 C-Atomen, wobei die Gruppe —$OR_5$ in den unter $R_1$ genannten Alkylketten in der Mitte oder am Ende stehen kann,

$R_1$ = Cycloalkylrest mit 3 bis 7 Ring-C-Atomen, der ggf. durch einen oder mehrere Alkylreste mit 1 bis 5 C-Atomen und/oder einen oder mehrere $OR_5$-Reste substituiert sein kann,

$R_1$ = Aralkylrest, bei dem die Alkylgruppen 1 bis 5 C-Atome besitzen können und bei dem der aromatische Ring selbst ggf. durch Alkylgruppen mit 1 bis 5 C-Atomen und/oder $OR_5$-Reste substituiert sein kann,

$R_1$ = Arylrest, bei dem der aromatische Ring selbst ggf. durch Alkylgruppen mit 1 bis 5 C-Atomen und/oder $OR_5$-Reste substituiert sein kann,

$R_2$ = entsprechend einer der genannten Möglichkeiten von $R_1$, wobei $R_1$ und $R_2$ identisch oder nicht identisch sein können,

$R_1 + R_2$ = über ein 5- oder 6-Ringsystem miteinander verbunden, das ggf. durch ein Hetero-Atom wie N, O, S oder P unterbrochen ist,

$R_3$ = entsprechend $R_2$, wobei $R_2$ und $R_3$ identisch oder nicht identisch sein können,

$R_4$ = H und/oder wie $R_1$, n = 1-5,

einsetzt.

3. Verfahren nach Anspruch 1 und 2, dadurch gekennzeichnet, dass man als tetrasubstituierten Harnstoff N,N-Di-i-propyl-N'-methyl-N'-phenylharnstoff einsetzt.

4. Verfahren nach Anspruch 1 und 2, dadurch gekennzeichnet, dass man als tetrasubstituierten Harnstoff N,N-Dibutyl-N'-methyl-N'-phenylharnstoff einsetzt.

5. Verfahren nach Anspruch 1-4, dadurch gekennzeichnet, dass man den tetrasubstituierten Harnstoff mit für das Anthrachinonverfahren üblichen aromatischen Kohlenwasserstoffen, bevorzugt in einem Mengenverhältnis von 10-50 zu 90-50 Volumenteilen, einsetzt.

6. N,N.-Dibutyl-N'-methyl-N'-phenylharnstoff.

7. N,N-Di-i-propyl-N'-methyl-N'-phenylharnstoff.

## Claims

1. A process for the production of hydrogen peroxide, according to the anthraquinone process, in which an anthraquinone derivative is dissolved as a reaction carrier in a solvent or solvent mixture, is then alternately hydrogenated and oxidized and the hydrogen peroxide, which is produced during oxidation, is removed from the system using a urea which is tetra-substituted by hydrocarbon radicals, characterised in that a tetrasubstituted urea, in which at least one substituent is an aryl group which is directly adjacent to a nitrogen atom, is used as the sole solvent or as a component in a solvent mixture.

2. A process according to claim 1, characterised in that a tetra-substituted urea is used which corresponds to the formula

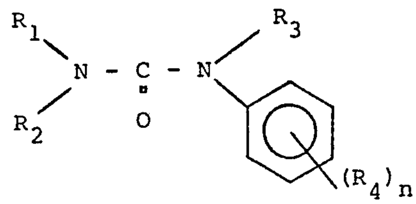

in which

$R_1$ represents an alkyl radical having from 1 to 12, preferably from 1 to 5 carbon atoms which may optionally be substituted by one or more $OR_5$-radicals, $R_5$ represents H or an alkyl radical having from 1 to 12, preferably from 1 to 5 carbon atoms, and the group $—OR_5$ in the alkyl chains mentioned under $R_1$ may be positioned in the middle or at the end of the chains,

$R_1$ represents a cycloalkyl radical having from 3 to 7 ring carbon atoms which may optionally be substituted by one or more alkyl radicals having from 1 to 5 carbon atoms and/or one or more $OR_5$-radicals,

$R_1$ represents an aralkyl radical, in which the alkyl groups may have from 1 to 5 carbon atoms and in which the aromatic ring itself may optionally be substituted by alkyl groups having from 1 to 5 carbon atoms and/or $OR_5$-radicals,

$R_1$ represents an aryl radical, in wich the aromatic ring itself may optionally be substituted by alkyl groups having from 1 to 5 carbon atoms and/or $OR_5$-radicals,

$R_2$ corresponds to one of the possibilities mentioned for $R_1$, in which $R_1$ and $R_2$ mays be the same or different,

$R_1$ and $R_2$ are joined together in a 5- or 6-ring system which may optionally be interrupted by a hetero atom, such as N, O, S or P,

$R_3$ corresponds to $R_2$, and $R_2$ and $R_3$ may be the same or different,

$R_4$ represents H and/or corresponds to $R_1$, n represents 1 to 5.

3. A process according to claims 1 and 2, characterised in that N,N-di-i-propyl-N′-methyl-N′-phenylurea is used as a tetra-substituted urea.

4. A process according to claims 1 and 2, characterised in that N,N-dibutyl-N′-methyl-N′-phenylurea is used as tetra-substituted urea.

5. A process according to claims 1 to 4, characterised in that the tetra-substituted urea is used with the aromatic hydrocarbons which are conventional for the anthraquinone process, preferably in a quantity ratio of from 10 to 50 to 90 to 50 parts by volume.

6. N,N-dibutyl-N′-methyl-N′-phenylurea.

7. N,N-di-i-propyl-N′-methyl-N′-phenylurea.

## Revendications

1. Procédé pour la fabrication d'eau oxygénée selon le procédé anthraquinone, dans lequel un dérivé anthraquinone est dissout comme support réactionnel dans un solvant ou un mélange de solvants, est alternativement hydrogéné et oxygéné, et l'eau oxygénée produite lors de l'oxydation est éliminée du système, avec mise en œuvre d'urée tétrasubstituée par des radicaux hydrocarbures, procédé caractérisé en ce que comme solvant unique ou comme composant d'un mélange de solvants, on met en œuvre de l'urée tétrasubstituée dans laquelle au moins un substituant est constitué par un groupe aryl, qui est immédiatement voisin d'un atome d'azote.

2. Procédé selon la revendication 1, caractérisé en ce que l'on met en œuvre une urée tétrasubstituée selon la formule

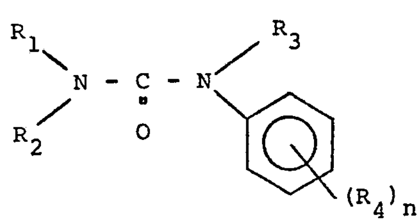

(I)

dans laquelle les symboles signifient :

$R_1$ = un reste alcoyle avec 1 à 12, de préférence 1 à 5 atomes de C, qui peut être éventuellement substitué par un ou plusieurs restes $OR_5$,

$R_5$ = H ou un reste alcoyle avec 1 à 12, de préférence 1 à 5 atomes de C, le groupe —$OR_5$ pouvant être situé dans la chaîne alcoyle désignée par $R_1$, au milieu ou en bout,

$R_1$ = un reste cycloalcoyle, avec 3 à 7 atomes de C cycliques, qui peut être éventuellement substitué par un ou plusieurs restes alcoyle avec 1 à 5 atomes de C et/ou un ou plusieurs restes $OR_5$,

$R_1$ = un reste aralcoyle, dans lequel les groupes alcoyle peuvent comporter 1 à 5 atomes de carbone et dans lequel le cycle aromatique lui-même peut éventuellement être substitué par des groupes alcoyle avec 1 à 5 atomes de C et/ou un reste $OR_5$,

$R_1$ = un reste aryle, dans lequel le cycle aromatique lui-même peut éventuellement être substitué par des groupes alcoyle avec 1 à 5 atomes de C et/ou un reste $OR_5$,

$R_2$ = identique à une des possibilités mentionnées pour $R_1$, avec $R_1$ et $R_2$ pouvant être identiques ou non,

$R_1 + R_2$ = sont reliés entre eux par un système cyclique à 5 ou 6 atomes de C, qui peut être interrompu éventuellement par un hétéro-atome comme N, O, S ou P,

$R_3$ = identique à $R_2$, avec $R_2$ et $R_3$ pouvant être identiques ou non,

$R_4$ = H et/ou comme $R_1$, n = 1-5.

3. Procédé selon l'une des revendications 1 ou 2, caractérisé en ce que l'on met en œuvre, comme urée tétrasubstituée, la N,N-di-iso-propyl-N'-méthyl-N'-phénylurée.

4. Procédé selon l'une des revendications 1 ou 2, caractérisé en ce que l'on met en œuvre, comme urée tétrasubstituée, la N,N-di-butyl-N'-méthyl-N'-phénylurée.

5. Procédé selon l'une quelconque des revendications 1 à 4, caractérisé en ce que l'on met en œuvre l'urée tétrasubstituée avec les hydrocarbures aromatiques habituels pour le procédé anthraquinone, de préférence dans un rapport de 10-50 à 90-50 parties en volume.

6. N,N-dibutyl-N'-méthyl-N'-phénylurée.

7. N,N-diisopropyl-N'-méthyl-N'-phénylurée.